(19) Europäisches Patentamt
European Patent Office
Office européen des brevets

(11) Veröffentlichungsnummer: **0 099 062**
**A2**

# (12) EUROPÄISCHE PATENTANMELDUNG

(21) Anmeldenummer: 83106606.3

(22) Anmeldetag: 06.07.83

(51) Int. Cl.[3]: C 08 L 25/14
C 08 L 25/10, C 08 L 53/02
C 08 L 71/04, C 08 L 33/08

(30) Priorität: 15.07.82 DE 3226427

(43) Veröffentlichungstag der Anmeldung: 25.01.84 Patentblatt 84/4

(84) Benannte Vertragsstaaten: BE DE FR GB NL

(71) Anmelder: BASF Aktiengesellschaft
Carl-Bosch-Strasse 38
D-6700 Ludwigshafen(DE)

(72) Erfinder: Hambrecht, Juergen, Dr.
Werderstrasse 30
D-6900 Heidelberg(DE)

(72) Erfinder: Brandstetter, Franz, Dr.
Ritterbueschel 45
D-6730 Neustadt(DE)

(72) Erfinder: Ziegler, Walter, Dr.
Starenweg 15
D-6803 Edingen-Neckarhausen(DE)

(72) Erfinder: Mueller, Wolfgang F., Dr.
Hahnenweg 20
D-6730 Neustadt(DE)

(72) Erfinder: Bronstert, Klaus, Dr.
Gartenstrasse 26
D-6719 Carlsberg(DE)

(72) Erfinder: Echte, Adolf, Dr.
Leuschnerstrasse 42
D-6700 Ludwigshafen(DE)

## (54) Thermoplastische Formmassen.

(57) Thermoplastische Formmasse, die ein Styrolpolymerisat, einen Polyphenylenether sowie als eine die Schlagzähigkeit verbessernde Komponente ein Blockcopolymerisat enthält, das durch Umsetzung eines Ethylencopolymerisates mit einem lebenden polymeren Anion erhalten worden ist.

EP 0 099 062 A2

Croydon Printing Company Ltd

# Thermoplastische Formmassen

Die Erfindung betrifft thermoplastische Formmassen auf der Grundlage von Styrolpolymerisaten, Polyphenylenethern und einer die Schlagzähigkeit verbessernde Komponente.

Thermoplastische Massen, die sich zur Herstellung von Formteilen eignen und die Styrolpolymerisate und Polyphenylenether enthalten, sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß Formteile eine mitunter nicht ausreichende Schlagzähigkeit haben.

Es ist deshalb verschiedentlich vorgeschlagen worden, die Schlagzähigkeit durch Zugabe von elastomeren Blockmischpolymerisaten zu erhöhen. So werden z.B. in den DE-AS 19 32 234, DE-OS 24 34 848, DE-OS 27 13 509, DE-OS 27 50 515 und DE-OS 30 385 551 Formmassen aus Styrolpolymerisaten, Polyphenylenethern und Zusätzen von unterschiedlich aufgebauten hydrierten und/oder nichthydrierten Blockmischpolymeren beschrieben, die vornehmlich aus polymerisierten vinylaromatischen Kohlenwasserstoffblöcken und polymerisierten konjugierten Dienpolymerisatblöcken bestehen. Diese Formmassen zeichnen sich durch eine verbesserte Schlagzähigkeit aus. Allen diesen Mischungen ist jedoch gemein, daß der Zusatz der elastomeren Blockmischpolymerisate und Polyolefinharze zu einer Absenkung der Wärmeformbeständigkeit führt und die Erhöhung der Schlagzähigkeit zum Teil nicht ausreicht.

vG/IG

Aufgabe der vorliegenden Erfindung war es deshalb, thermoplastische Formmassen auf der Grundlage von Styrolpolymerisaten und Polyphenylenethern zu schaffen, die zu Formteilen mit einer verbesserten Schlagzähigkeit bei gleichzeitig wenig veränderter hoher Wärmeformbeständigkeit verarbeitet werden können.

Diese Aufgabe wird erfindungsgemäß gelöst durch Formmassen auf der Grundlage von a) Styrolpolymerisaten, b) Polyphenylenethern und c) einer die Schlagzähigkeit verbesserende Komponente, wobei die Komponente c) ein Blockmischpolymerisat ist, das durch Umsetzung eines Copolymerisates aus Ethylen und (Meth)acrylsäureester-, Halogen-, Anhydrid- oder Epoxidgruppen enthaltendes Monomer oder Kohlenmonoxid mit einem lebenden polymeren Anion aus einem oder mehreren anionisch polymerisierten Monomeren erhalten worden ist.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können modifizierte oder unmodifizierte Styrolpolymerisate und Polyphenylenether in beliebigen Mengen, beispielsweise in Mengen von 5 bis 90 Gew.% Styrolpolymerisat und 95 bis 10 Gew.% Polyphenylenether enthalten. Für die Herstellung von Formteilen eignen sich insbesondere solche Formmassen, die 20 bis 80 Gew.% Styrolpolymerisate und 80 bis 20 Gew.% Polyphenylenether enthalten. Zusätzlich enthalten die er-

findungsgemäßen Formmassen 3 bis 30, vorzugsweise 5 bis 20 Gewichtsteile, bezogen auf 100 Gewichtsteile der Gesamtmischung, der Komponenten a), b) und c) einer die Schlagzähigkeit verbessernden Komponente c), die ein Blockcopolymerisat der oben angegebenen Art ist.

Die Komponenten a) können unmodifizierte Styrolpolymerisate und/oder schlagzäh modifizierte Styrolpolymerisate sein. Die Herstellung der in den thermoplastischen Formmassen enthaltenen unmodifizierten Styrolpolymerisaten kann nach beliebigen Verfahren, wie sie beispielsweise in H. Ohlinger, Polystyrol Teil I, Herstellverfahren und Eigenschaften der Produkte, Springer-Verlag, Berlin, Göttingen, Heidelberg, 1955 oder in S.R. Sandler, W. Karo Polymer Synthesis, Organic Chemistry Vol 29 - I, Academic Press, New York, 1974, beschrieben sind, erfolgen. Bevorzugt werden Styrolpolymerisate mit Molekulargewichten von Mw = 50000 bis 500000.

Die Herstellung der in den Formmassen enthaltenen schlagfest modifizierten Styrolpolymerisate kann nach beliebigen Verfahren erfolgen, sofern dafür gesorgt ist, daß die mittlere Teilchengröße im Bereich von 0,6 bis 4 $\mu$ liegt. Man kann auch schlagfest modifizierte Styrolpolymerisate, deren Weichkomponenten unterschiedliche Teilchengrößen haben, miteinander mischen. So kann man beispielsweise 90 Gewichtsteile eines Polymerisates mit einer mittleren Teilchengröße von 0,6 $\mu$m und 10 Gewichtsteilen eines Polymerisates mit einer mittleren Teilchengröße von 6 $\mu$m verwenden. Besonders geeignet sind solche thermoplastischen Formmassen, in denen die mittlere Teilchengröße im Bereich von 0,6 bis 4 $\mu$m liegt und in denen 99 bis 85 Gew.% der Teilchen einen Teilchendurchmesser von 0,3 bis 0,9 $\mu$m und 1 bis 20 Gew.% der Teilchen einen Durchmesser von 3 bis 7 $\mu$m haben.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur unter $-20^{o}C$ besitzen. Besonders eignen sich Butadien-Polymerisate mit einem 1,4-cis-Gehalt, der zwischen 25 und 98 % liegt. Es könnten aber auch Acrylatkautschuke, EPDM-, Polybutylen- und Polyoctenamerkautschuke eingesetzt werden.

Bei den Polyphenylenethern der Komponente b) handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein $\alpha$-ständiges tert. Wasserstoff-

atom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)-ether, Poly(2,6-dimethyl-1,4-phenylen)ether, Poly(2,6-dibrom-1,4-phenylen)ether. Bevorzugterweise wird der Poly-(2,6-dimethyl-1,4-phenylen)ether eingesetzt. Ganz besonders bevorzugt werden Poly(2,6-dimethyl-1,4-phenylen)-ether mit einer Grenzviskosität zwischen 0,40 und 0,66 dl/g (gemessen in Chloroform bei 30°C).

Die die Schlagzähigkeit der erfindungsgemäßen Formmassen verbessernde Komponente c) ist ein Blockmischpolymerisat, das durch Umsetzung eines Ethylencopolymerisats der allgemeinen Formel

$$[(A_n)_i(B_l)_k]$$

mit lebenden polymeren Anionen, erhalten wird, die aus ethylenisch ungesättigten, anionisch polymerisierbaren Monomeren, gewonnen worden sind.

Die hierbei zu verwendenden Ethylencopolymerisate der oben angegebenen, allgemeinen Formel, die als funktionelle Gruppe mindestens eine Acrylsäureester-, Methacrylsäureester-, Halogen-, Carbonsäureanhydrid- oder Epoxygruppe oder als Comonomeres Kohlenmonoxid enthalten, sind an sich bekannt (vgl. z.B. Houben-Weyl, "Methoden der organischen Chemie", Band 14/1, 1961, Seiten 619 bis 621, Verlag Georg Thieme, Stuttgart, oder Renfrew & Morgan, "Polyethylene", 1960, Seiten 345 bis 369, Verlag Iliffe & Sons Ltd., London). Die Herstellung der Ethylencopolymerisate kann nach den herkömmlichen Verfahren im Autoklaven und/oder rohrförmigen Polymerisationssystem bei Drücken von 200 bis 5000 bar und Temperaturen von 50 bis 450°C in Gegenwart

radikalisch zerfallender Polymerisationsinitiatoren erfolgen (vgl. Ullmanns Encyklopädie der technischen Chemie, Band 19 (1980), Seiten 167 bis 26). Als Comonomere zum Ethylen kommen u.a. in Frage: Alkylester der Acryl- oder Methacrylsäure, Kohlenmonoxid, Vinylchlorid, Maleinsäureanhydrid, Vinylglycidylether, Glycidyl(meth)acrylat oder Vinylcyclohexanonmonoxid.

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190$^o$C und einem Auflagegewicht von 2,16 kp, liegen oberhalb von 0,1 g/10 min. In der allgemeinen Formel

$$[(A_n)_i(B_l)_k]$$

ist A = $-CH_2-CH_2-$ und B das einpolymerisierte Comonomer mit einer der oben beschriebenen funktionellen Gruppen, n = eine ganze Zahl größer als 30, l, i und k = eine ganze Zahl gleich oder größer als 1 und k.l $\geq$ j ist. Die Zahlen für n und l entsprechen dem Polymerisationsgrad, die Zahlen für i und k der Blockanzahl im Copolymerisat.

Für die Herstellung der erfindungsgemäßen Blockmischpolymerisate der Komponente c) besonders geeignet sind Copolymerisate des Ethylens mit Acrylsäure- oder Methacrylsäurealkylestern wie Acrylsäuremethyl-, -n-butyl-, -tert.-butyl- oder -ethylhexylester, Methacrylsäuremethylester, Maleinsäureanhydrid oder Kohlenmonoxid.

Die oben beschriebenen Ethylencopolymerisate werden vorzugsweise mit lebenden polymeren Anionen $C_m$, erhalten aus ethylenisch ungesättigten, anionisch polymerisierbaren Monomeren, unter Ausschluß von Luft und Feuchtigkeit umgesetzt.

Die Komponente c) ist daher ein Blockcopolymerisat der allgemeinen Formel $[(A_n):(B_l)_k(C_m)_j]$, wobei A = $CH_2$-$CH_2$-, B ein Acryl- oder Methacrylsäureester oder ein Halogen-, Anhydrid- oder Epoxidgruppen enthaltendes Monomeres oder Kohlenmonoxid ist. $C_m$ ist aus einem oder mehreren Monomeren erhalten worden. n und m sind ganze Zahlen größer als 30, l, i, k und j eine Zahl gleich oder größer als 1 und k.l $\geq$ j ist.

Unter lebenden polymeren Anionen werden Polymere verstanden, in denen die Kettenenden noch zur weiteren Anlagerung von Monomeren oder Polymeren fähig sind (vgl. G. Henrici-Olive, "Polymerisation", Verlag Chemie, Weinheim (1969)). Die Herstellung der lebenden polymeren Anionen aus den ethylenisch ungesättigten, anionisch polymerisierbaren Monomeren erfolgt auf übliche Art und Weise nach bekannten Verfahren durch Polymerisation der Monomeren in Lösung in Gegenwart eines Monolithium-Kohlenwasserstoffs als Initiator. Als Monomere kommen dabei alle anionisch polymerisierbaren Verbindungen in Frage, wie sie u.a. in "Polymer Chemistry" von B. Vollmert, Springer--Verlag, Berlin, Heidelberg, New York (1973), Seiten 44 bis 47, beschrieben sind. Bevorzugt sind Styrol, Butadien, Isopren sowie deren Gemische. Es können dabei nur ein anionisch polymerisierbares oder gleichzeitig mehrere Monomere eingesetzt werden. Je nach verwendeten Polymerisations-Verfahren werden aus den obigen Monomeren Copolymerisate mit mehr oder weniger statistischer Verteilung der Monomeren entlang der Polymerkette oder bei Einsatz nur eines Monomeren reine Homopolymerisate erhalten. Bei den Polymeren aus den anionisch polymerisierbaren Monomeren handelt es sich um Produkte des Typs $C_m$; wobei C ein oder mehrere anionisch polymerisierbare Monomere und m der Polymerisationsgrad ist; m ist dabei größer als 30.

Besonders bevorzugt sind Blockcopolymerisate der oben beschriebenen Art, bei denen n = 200 bis 8000, m = 100 bis 4000, l = 1 bis 1500, i = 1 bis 5, k = 1 bis 20 und j = 1 bis 20.

Die Umsetzung des Ethylencopolymerisates mit dem aktiven lebenden Polymerisat eines oder mehrerer anionisch polymerisierter Monomerer erfolgt im allgemeinen in Lösung. Als Lösungsmittel eignen sich dabei vor allem Tetrahydrofuran oder bei Raumtemperatur flüssige aromatische Kohlenwasserstoffe wie z.B. Benzol, Xylol, Toluol oder Ethylbenzol. Sinnvollerweise, aber nicht zwingenderweise verwendet man das entsprechende Lösungsmittel schon bei der Herstellung des lebenden Polymerisates aus den anionisch polymerisierbaren Monomeren. Dabei kann die Lösung des aktiven Polymerisates ($C_m$) zu einer Lösung des Ethylencopolymerisates $[(A_n)_i(B_l)_k]$ als auch umgekehrt die Lösung des Ethylencopolymerisates $[(A_n)_i(B_l)_k]$ zur aktiven Polymerisatlösung ($C_m$) unter Stickstoff, Feuchtigkeitsausschluß und Rühren bei Temperaturen im Bereich von 0 bis 130°C, vorzugsweise 20 bis 100°C, gegeben werden. Die Reaktion ist im allgemeinen nach wenigen Minuten, maximal nach 120 Minuten, abgelaufen. Das erhaltene Blockcopolymerisat kann in Lösung oder nach einem gesonderten Aufarbeitungsschritt, wie Ausfällen, Eindampfen oder Direktentgasen verwendet werden.

Die Mischungen aus den Styrolpolymerisaten, Polyphenylenethern und den elastomeren Blockmischpolymerisaten der Komponente c) können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Die erfindungsgemäßen Formmassen besitzen neben einer hohen Wärmeformbeständigkeit eine hohe Kerbschlagzähigkeit und hohe Zähigkeiten im Fallrohrtest sowie eine gute Fließfähigkeit und ausgezeichnete Oberflächeneigenschaften.

Die folgenden Beispiele dienen dazu, die Erfindung zu beschreiben, ohne daß damit eine Begrenzung der Erfindung beabsichtigt ist. Die angegebenen Teile sind Gewichtsteile, es sei denn, es ist anders angegeben.

Die Intrinsikviskosität des Polyphenylenethers wurde durch Messung an 0,5%igen Lösungen in Chloroform bei 30°C bestimmt.

Die Bruchenergie wurde nach DIN 53443, Blatt 1 bei 23°C, die Kerbschlagzähigkeit nach DIN 53433 bei 23°C gemessen.

Die Fließfähigkeit wurde anhand des Schmelzindex nach DIN 53735 bei 250°C ermittelt und die Wärmeformbeständigkeit anhand des Erweichungspunktes nach Vicat entsprechend DIN 53460/B bestimmt.

Beispiele und Vergleichsversuche

I. Herstellung der Styrolpolymerisate a)

$a_1$) Ein Polystyrol mit einem Molekulargewicht von 220.000, viskosimetrische Messung in Benzol bei 25°C wurde gemäß der in S.R. Sandler, W. Karo Polymer

Synthesis, Organic Chemistry, Vol. 29 - I, Academic Press, New York, 1974, S. 8 angegebenen Vorschrift durch thermische Polymerisation gewonnen.

$a_2$) Herstellung eines schlagfesten Polystyrols (mit einer mittleren Teilchengröße von 0,5 µm:

In einem 5 l-Rührkessel mit Blattrührer wird eine Lösung bestehend aus

| | |
|---|---|
| 1 560 g | Styrol |
| 240 g | Butadien/Styrol-Blockcopolymerisat mit verschmiertem Übergang zwischen den Blöcken: = 1,74 dl/g Toluol 25°C; Blockpolystyrol = 31,0 %; = 0,364 dl/g (Toluol 25°C); Gesamtstyrolgehalt = 41,6 % |
| 1,6 g | t-Dodecylmercaptan |
| 2,2 g | Octadecyl-3(3',5'-ditert.-butyl-4-hydroxyphenyl)-propionat und |
| 1.7 g | Dicumylperoxid |

bei 110°C Innentemperatur und einer Rührerdrehzahl von 150 Upm bis zu einem Feststoffgehalt von 43,8 Gew.% vorpolymerisiert.

Anschließend werden 1800 ml Wasser, die 9,0 g Polyvinylpyrrolidon vom K-Wert 90 und 1,8 g $Na_4P_2O_7$ enthalten, zugesetzt und die Rührerdrehzahl auf 300 Upm erhöht. Durch Nachpolymerisation von 5 Stunden bei 120°C und 5 Stunden bei 140°C wird bis zu einem Styrolumsatz 99 % auspolymerisiert.

$a_3$) Herstellung eines schlagfesten Polystyrols mit einer mittleren Teilchengröße von ca. 6 µm:

In einem 4 l-Rührkessel mit Blattrührer wird eine Lösung bestehend aus

| | | |
|---|---|---|
| 1 283 | g | Styrol |
| 112 | g | Polybutadien (1,2-Vinylgehalt ca. 9 Gew.%) |
| 1,5 | g | tert.-Dodecylmercaptan |
| 1,5 | g | Octadecyl-3(3',5'-di-tert.-butyl-4'-hydroxiphenyl)-propionat |
| 1,5 | g | Dicumylperoxid |

bei 110°C Innentemperatur und einer Rührerdrehzahl von 150 Upm bis zu einem Feststoffgehalt von 25,4 Gew.% vorpolymerisiert. Anschließend werden 1800 ml Wasser, die 9 g Polyvinylpyrrolidon vom K-Wert 90 und 1,8 g $Na_4P_2O_7$ enthalten, zugesetzt und die Rührerdrehzahl auf 300 Upm erhöht. Durch Nachpolymerisation von 3 Stunden bei 110°C, 3 Stunden bei 120°C und 4 Stunden bei 140°C wird bis zu einem Styrolumsatz von 99 % auspolymerisiert.

$a_4$) Herstellung eines schlagfesten Polystyrols mit einer mittleren Teilchengröße von ca. 1,5 µm:

In einem 4 l-Rührkessel mit Blattrührer wird eine Lösung bestehend aus

| | | |
|---|---|---|
| 1 283 | g | Styrol |
| 112 | g | Polybutadien (1,2-Vinylgehalt ca. 9 Gew.%) |
| 1,5 | g | tert.-Dodecylmercaptan |
| 1,5 | g | Octadecyl-3(3',5'-di-tert.-butyl-4'-hydroxiphenyl)-propionat |
| 1,5 | g | Dicumylperoxid |

bei 110°C Innentemperatur und einer Rührerdrehzahl von 350 Upm bis zu einem Feststoffgehalt von 25,4 Gew.% vorpolymerisiert. Anschließend werden 1800 ml Wasser, die 9 g Polyvinylpyrrolidon vom K-Wert 90 und 1,8 g $Na_4P_2O_7$ enthalten, zugesetzt und die Rührerdrehzahl auf 300 Upm erhöht. Durch Nachpolymerisation von 3 Stunden bei 110°C und 4 Stunden bei 140°C wird bis zu einem Styrolumsatz von 99 % auspolymerisiert.

II. Herstellung des Polyphenylenethers b)

Zu einer Vorlage von 1,3 g Cu-I-Bromid und 33 g Dibutylamin werden 2 g 2,6-Dimethylphenol gegeben und bei 20°C 5 Minuten unter Einleiten von Sauerstoff gerührt, dann wird im Verlauf von 30 Minuten eine Lösung von 204 g 2,6-Dimethylphenol in 1 400 ml Toluol eindosiert, anschließend wird noch 1,5 Stunden bei 20°C gerührt. Die Reaktion wird in Gegenwart von 50 Liter/Stunde Sauerstoff durchgeführt. Nach Beendigung der Reaktion wird das Polymerisat mit 10 l Methanol gefällt. Das erhaltene Polymerisat hat nach dem Trocknen eine Intrinsic Viskosität $[\eta]_{0,5}$ von 0,60 dl/g.

III. Herstellung der elastomeren Blockmischpolymerisate c)

Die als Ausgangsprodukte eingesetzten Ethylencopolymerisate sind Produkte, die nach dem Hochdruckprozeß in Autoklaven oder rohrförmigen Polymerisationssystemen erhalten werden. Der Comonomeranteil, die Dichte und der Schmelzindex sind in der Tabelle aufgeführt.

Als Polymerisate aus den anionisch polymerisierbaren Monomeren werden Produkte verwendet, die durch anionische Polymerisation in Lösung erhalten werden.

Herstellung des Blockcopolymerisates c) (s. Tabelle 1)

Zu der in der Tabelle angegebenen Menge an Ethylencopolymerisat (ca. 10 gew.%ig in Lösung) wird unter Luft- und Feuchtigkeitsausschluß bei einer Temperatur von 75°C die in der Tabelle 1 angegebene Menge an aktivem, lebendem Polymerisat eines anionisch polymerisierten Monomeren in Lösung während 30 Minuten unter kräftigem Rühren zugegeben. Das aktive lebende Polymerisat war als 15gew.%ige Lösung in Toluol hergestellt worden. Dazu wurde das bzw. die Monomeren in Toluol vorgelegt, auf 40°C erwärmt und zur Vernichtung von protonenaktiven Verunreinigungen solange portionsweise mit sekundärem Butyllithium (2,4gew.%ig in Hexan) versetzt, bis ein Temperaturanstieg das Einsetzen der Polymerisation anzeigte. Dann wurde unverzüglich die zum Erreichen des gewünschten Molgewichts berechnete Menge sekundäres Butyllithium zugesetzt und bei einer Temperatur von 50 bis 60°C 40 Minuten lang polymerisiert.

Nach beendeter Zugabe wird noch 30 Minuten bei 75°C gerührt. Danach wird das Reaktionsprodukt mit Ethanol ausgefällt, abgesaugt, zweimal mit Ethanol gewaschen und bei 60°C im Vakuum bei 1 Torr getrocknet. Die Zusammensetzung der Blockmischpolymerisate $C_1$ bis $C_7$ geht aus Tabelle 1 hervor.

Die in der Tabelle 2 angegebenen Gewichtsteile an Styrolpolymerisaten a), an Poly(2,6-dimethyl-1,4-phenylen)-ether b) und an elastomerem Blockmischpolymerisat c) wurden mit jeweils 0,8 Gewichtsteilen Tris(nonylphenyl)-phosphit und 1,5 Gewichtsteilen eines Polyethylenwachses mit einer Schmelzviskosität von 1300 cSt, gemessen bei 120°C, auf einem Zweiwellenextruder bei 280°C aufgeschmolzen, homogenisiert, gemischt und granuliert.

Aus den Mischungen wurden mittels einer Spritzgußmaschine bei 280°C Prüfkörper hergestellt. Die Ergebnisse der Prüfungen sind in der Tabelle 2 zusammengestellt.

Tabelle 1

| Komponente | Ethylencopolymerisat | | Dichte | Schmelzindex | Gew.-Tle. | Polymer aus den anionisch polymerisierbaren Monomeren | | |
|---|---|---|---|---|---|---|---|---|
| c | Comonomeres | Gew.% | $g/cm^3$ | g/10 min | | Monomer | Polymerisationsgrad | Gew.-Tle. |
| $c_1$ | Methyl-methacrylat | 1 | 0,922 | 0,7 | 70 | Styrol | 200 | 30 |
| $c_2$ | n-Butyl-acrylat | 4 | 0,926 | 0,3 | 50 | Styrol | 200 | 50 |
| $c_3$ | " | 4 | 0,926 | 0,3 | 50 | Butadien | 200 | 50 |
| $c_4$ | " | 4 | 0,926 | 0,3 | 60 | Styrol/ Butadien | 200 | 40 |
| $c_5$ | " | 18 | 0,925 | 1,8 | 80 | (1:1) | 200 | 20 |
| $c_6$ | " | 18 | 0,925 | 1,8 | 70 | Styrol | 200 | 30 |
| $c_7$ | Maleinsäure-anhydrid | 8 | 0,926 | 2,3 | 70 | Styrol | 200 | 30 |
| $c_8$ | Allyl-glycidylether | 10 | 0,918 | 9,7 | 70 | Styrol | 200 | 30 |
| $c_9$ | Vinylchlorid | 12 | 0,920 | 14,5 | 70 | Styrol | 200 | 30 |
| $c_{10}$ | Kohlenmonoxid | 8 | 0,922 | 2,9 | 70 | Styrol | 200 | 30 |
| $c_{11}$ | " | 15 | 0,926 | 1,8 | 70 | Styrol | 200 | 30 |

Tabelle 2

| Beisp. | Schlagfestes Polystyrol a) | [Gew.%] | Polyphenylenether b) | [Gew.%] | Blockmischpolymerisat c) | [Gew.%] | Vicat-temp. [°C] | Kerbschlagzähigkeit [KJ/m²] | Bruchenergie [Nm] | Schmelzfließindex [ /10] |
|---|---|---|---|---|---|---|---|---|---|---|
| 1 | $a_1$ | 50 | b | 40 | $c_1$ | 10 | 131 | 9 | 18 | 78 |
| 2 | $a_2$<br>$a_3$ | 60<br>7,5 | b | 22,5 | $c_2$ | 10 | 115 | 15 | 26 | 165 |
| 3 | $a_2$<br>$a_3$ | 44,5<br>5,0 | b | 40,5 | $c_6$ | 10 | 130 | 21 | 32 | 50 |
| 4 | $a_4$ | 49,5 | b | 40,5 | $c_3$ | 10 | 125 | 18 | 25 | 47 |
| 5 | $a_2$<br>$a_3$ | 44,5<br>5,0 | b | 40,5 | $c_4$ | 10 | 128 | 20 | 32 | 42 |
| 6 | $a_2$<br>$a_3$ | 44,5<br>5,0 | b | 40,5 | $c_5$ | 10 | 130 | 18 | 30 | 55 |
| 7 | $a_2$<br>$a_3$ | 44,5<br>5,0 | b | 40,5 | $c_7$ | 10 | 131 | 17 | 27 | 38 |
| 8 | $a_2$<br>$a_3$ | 40,5 | b | 40,5 | $c_2$ | 15 | 130 | 22 | 30 | 48 |
| 9 | $a_2$<br>$a_3$ | 44,5<br>5,0 | b | 40,5 | $c_8$ | 10 | 129 | 20 | 21 | 139 |
| 10 | $a_2$<br>$a_3$ | 44,5<br>5,0 | b | 40,5 | $c_9$ | 10 | 131 | 19 | 29 | 159 |
| 11 | $a_2$<br>$a_3$ | 44,5<br>5,0 | b | 40,5 | $c_{10}$ | 10 | 133 | 23 | 30 | 89 |
| 12 | $a_2$<br>$a_3$ | 44,5<br>5,0 | b | 40,5 | $c_{11}$ | 10 | 131 | 22 | 30 | 78 |
| Vergleichsversuche (nicht erfindungsgemäß) | | | | | | | | | | |
| A | $a_2$<br>$a_3$ | 66,66<br>8,33 | b | 25 | - | - | 105 | 9 | 21 | 137 |
| B | $a_2$ | 60 | b | 22,5 | $c_B^{+)}$ | 10 | 104 | 14 | 28 | 123 |

+) $c_B$ ist ein hydriertes Blockmischpolymerisat vom ABA-Typ mit scharf getrennten Styrolblöcken A, die zusammen 35 Gew.% ausmachen und jeweils ein mittleres Molekulargewicht von 20.000 aufweisen, und einen hydrierten Polybutadienblock B.

## Patentansprüche

1. Thermoplastische Formmassen auf der Grundlage von

   a) Styrolpolymerisaten,

   b) Polyphenylenethern, und

   c) einer die Schlagzähigkeit verbessernden Komponente

   dadurch gekennzeichnet, daß die Komponente c) ein Blockcopolymerisat ist, das durch Umsetzung eines Copolymerisates aus Ethylen und (Methyl)acrylsäureester- oder Halogen-, Anhydrid- oder Epoxid-Gruppen enthaltendes Monomer oder Kohlenmonoxid mit einem lebenden polymeren Anion aus ein oder mehrere anionisch polymerisierten Monomeren erhalten worden ist.

2. Thermoplastische Formmassen gemäß Anspruch 1, dadurch gekennzeichnet, daß die Komponente c) ein Blockmischpolymerisat ist, das durch Umsetzung eines copolymerisierten aus Ethylen- und Acrylsäure- oder Methacrylsäurealkylester, Maleinsäureanhydrid oder Kohlenmonoxid mit einem lebenden polymeren Anion aus Styrol, Butadien, Isopren oder eine beliebige Mischung dieser Monomeren erhalten worden ist.